Europäisches Patentamt

European Patent Office

Office européen des brevets

(19)

(11) Veröffentlichungsnummer: **0 221 243**
A2

# (12) EUROPÄISCHE PATENTANMELDUNG

(21) Anmeldenummer: **86109891.1**

(22) Anmeldetag: **18.07.86**

(51) Int. Cl.⁴: **G 02 B 6/44**
**H 01 B 5/10**

(30) Priorität: **31.10.85 DE 3538664**

(43) Veröffentlichungstag der Anmeldung:
**13.05.87 Patentblatt 87/20**

(84) Benannte Vertragsstaaten:
**AT CH DE FR GB LI**

(71) Anmelder: **AEG KABEL Aktiengesellschaft**
**Bonnenbroicher Strasse 2-14**
**D-4050 Mönchengladbach 2(DE)**

(72) Erfinder: **Haag, Helmut, Dipl.-Phys.**
**Herderstrasse 1**
**D-5177 Titz 1(DE)**

(72) Erfinder: **Zamzow, Peter, Dipl.-Ing.**
**Erlenstrasse 9**
**D-4630 Bochum(DE)**

(72) Erfinder: **Nienhaus, Frank**
**Kuckumer Strasse 27**
**D-4050 Mönchengladbach 4(DE)**

(74) Vertreter: **Langer, Karl-Heinz, Dipl.-Ing.**
**Licentia Patent-Verwaltungs-GmbH Theodor-Stern-Kai 1**
**D-6000 Frankfurt/Main 70(DE)**

(54) Lichtwellenleiter-Luftkabel.

(57) Bei einem Lichtwellenleiter-Luftkabel, welches neben den der Zugfestigkeit und Energieübertragung dienenden verseilten Drähten mindestens ein Lichtwellenleiterelement mit einem Hohlkörper aufweist, in dem sich ein oder mehrere Lichtwellenleiter befinden, ist vorgesehen, daß das Lichtwellenleiterelement außerhalb der Seele angeordnet ist, daß es anstelle eines Drahtes vorgesehen ist und daß es die gleiche Schlaglänge wie die übrigen Drähte der Verseillage besitzt.

Fig. 3

EP 0 221 243 A2

## Lichtwellenleiter-Luftkabel

Die Erfindung betrifft ein Lichtwellenleiter-Luftkabel, welches neben den der Zugfestigkeit und Energieübertragung dienenden verseilten Drähten mindestens ein Lichtwellenleiterelement mit einem Hohlkörper aufweist, in dem sich eine oder mehrere Lichtwellenleiter befinden.

Elektrizitätsversorgungs-Unternehmen (EVU) benötigen für die Führung der Hochspannungsnetze eigene Nachrichtenverbindungen. Die klassischen Trägerfrequenz-Verbindungen auf Hochspannungsleitungen (TFH-Verbindungen) genügen nicht mehr den hohen Anforderungen, die an die Übertragungswege moderner Fernwirkanlagen und Prozeßrechner gestellt werden. Deshalb wurden in der Vergangenheit Koaxialkabel in Luftkabel eingebaut. Der heutige Kanalzahl- und Bandbreitenbedarf der Übertragungstechnik erfordert den Einsatz der modernen Lichtwellenleiter. Durch verschiedene Verlegetechniken können Luftkabel auf bestehende Hochspannungs-Leitungen aufgelegt werden.

Der Vorteil solcher Kabelanlagen besteht darin, daß das Gestänge der Leitung durch die Nachrichtenübertragungskabel kaum zusätzlich belastet wird. Bestehende Leitungen, die ein weiteres Seil nicht mehr aufnehmen können, bei denen auch das Erdseil nicht durch ein Luftkabel ersetzt werden kann, können in den meisten Fällen durch Auswechseln eines Leiterseils gegen ein Phasenseil-Luftkabel doch noch eine Nachrichtenverbindung aufnehmen. Für Mittelspannungsnetze fordert der wachsende Bedarf von Nachrichtenwegen besondere Techniken. Die geringen Bodenabstände der Seile und die Bauformen der Mittelspannungsleitungen lassen nur in wenigen Fällen ein zusätzliches Erdseil-Luftkabel zu. Hier bietet sich für das Phasenseilkabel ein weites Anwendungsfeld. In den vergangenen Jahren wurden bereits auf mehreren Kabelstrecken Luftkabel installiert.

Die Erfindung betrifft ein Lichtwellenleiter-Luftkabel, das neben den der Zugfestigkeit und Energieübertragung dienenden verseilten Drähten ein außerhalb der Seele angeordnetes Lichtwellenleiterelement aufweist.

Durch die DE-AS 24 44 353 ist es bereits bekannt geworden, für die Nachrichtenübertragung ein Phasenseil zu verwenden, in dessen Außenlage eine Koaxialleitung angeordnet ist, deren Außendurchmesser gleich dem Durchmesser der Drähte in der Außenlage ist. Aus "AEG-KABEL, Technische Mitteilungen", Sonderausgabe Februar 1985, ist ein zweilagig armiertes Lichtwellen-Luftkabel bekannt. Es besteht aus einer, die Lichtwellenleiter enthaltenden Kabelseele, die von einem druckfesten Polyethylenmantel umgeben ist, mit darüber liegender Armierung.

Die bisher bekannten Lösungen weisen den Nachteil auf, daß das zur Nachrichtenübertragung vorgesehene Verseilelement keinen Beitrag zur Leitfähigkeit des Phasen- oder Erdseils liefert. Das Seil wird durch zusätzliche Leitungen außerdem zu dick und zu schwer. Eine Abzweigmöglichkeit ist im allgemeinen nicht ohne weiteres gegeben; dazu muß das gesamte Phasenseil durchtrennt werden.

Der vorliegenden Erfindung liegt die Aufgabe zugrunde, ein Luftkabel der eingangs beschriebenen Art zur Nachrichtenübertragung in Hochspannungs-Freileitungsnetzen anzugeben, das einen wirtschaftlichen Betrieb erlaubt, dessen Herstellung rationell ist, dessen Gewicht und Durchmesser durch das Nachrichtenübertragungselement nicht wesentlich erhöht ist.

Diese Aufgabe wird bei einem Lichtwellenleiter-Luftkabel der eingangs erwähnten Art nach der Erfindung dadurch gelöst, daß das Lichtwellenleiterelement außerhalb der Seele angeordnet ist, daß es anstelle eines Drahtes vorgesehen ist, und daß es die gleiche Schlaglänge wie die übrigen Drähte der Verseillage besitzt.

- 4 -

Das Wesen der Erfindung besteht darin, daß das Lichtwellenleiterelement sich in seinen Eigenschaften von dem normalen Verseilelement, beispielsweise einem aus einer Aluminiumlegierung bestehenden Draht, nicht wesentlich unterscheidet. Aus Gründen der Sicherheit und des Schutzes vor Beschädigungen ist dieses Lichtwellenleiterelement vorzugsweise in einer unteren Lage angeordnet. Es ist vorzugsweise nicht im Kern angeordnet, weil die Seele eine sehr schlechte Zugänglichkeit besitzt, Abzweigstellen nur mit sehr umständlichen Mitteln geschaffen werden können und die konstruktive Reservelänge der Faser eingeschränkt ist. Vorteilhaft ist die Ausgestaltung des Lichtwellenleiterelementes aus einer leitfähigen Metallegierung, welche zur Herstellung der üblichen Verseildrähte verwendet wird. Die metallische Umhüllung hat den Vorteil, absolut wasserdicht verschlossen werden zu können und leicht umformbar zu sein. Dadurch ist es möglich, das Lichtwellenleiterelement als Hohlprofil herzustellen, die Lichtwellenleiterader einzulegen und dieses Profil durch Umformen zu verschließen und zu verschweißen. In einer bevorzugten Ausführungsform kann ein faserverstärktes Kunststoffprofil hergestellt, die Glasfaser eingelegt und das Profil verschlossen werden, solange es noch formbar ist und von selbst verschweißt. Das Verseilen eines solchen Lichtwellenleiterelements, das keine Leitfähigkeit besitzt in einer unteren Lage hat den Vorteil, daß bei Blitzschlag dieses Element geschützt ist (Faraday-Käfig) und keine erhöhte Feldstärken auftreten.

Besonders vorteilhaft ist die Verwendung eines vorgefertigten, faserverstärkten Profils, das durch einen Längsstopfen verschlossen wird.

In den Unteransprüchen 2 bis 13 sind Weiterbildungen und Ausführungsformen der Erfindung sowie ein Verfahren zur Herstellung eines erfindungsgemäßen Lichtwellenleiter-Luftkabels beschrieben.

Ausführungsbeispiele der Erfindung werden anhand der Zeichnung näher erläutert; dabei zeigt

Figur 1    den Aufbau eines Phasenseil-Luftkabels

Figur 2    ein mit einer Längsnut versehenes Rund-
           profil, das durch einen Längsstopfen
           verschlossen ist und

Figur 3    ein längsgeschlitztes Hohlprofil.

Die Erfindung wird beispielsweise am Aufbau eines Lichtwellenleiter-Luftkabels aus lagenverseilten Einzeldrähten erläutert. Der Kern besteht aus einem AlMGSi-Draht, den sogenannten Aldrey-Draht.

Der Durchmesser der Drähte kann nach DIN beispielsweise nur 2,1 mm betragen. Lichtwellenleiterelemente 1 können in der um die Seele herum verseilten Lage oder in der Außenlage eingebaut werden. Die Schlaglänge der Lage und der Durchmesser sind so abgestimmt, daß genügend Faserbeweglichkeit vorhanden ist. Die Drähte der zweilagigen Armierung sind gegenläufig verseilt, um ein Drall infolge des auf das Seil wirkenden Zuges zu  kompensieren. Falls die Lichtwellenleiterelemente 1 einen Metallmantel besitzen, können sie auch in der äußeren Lage untergebracht werden.

Etwas günstiger wird die Unterbringung der Lichtwellenleiterader in einem Aluminiumdraht mit beispielsweise 3,25 mm Durchmesser. 19 Drähte, davon mindestens ein Lichtwellenleiterelement, bilden das Luftkabel. Selbstverständlich können in der Außenlage auch aluminiumummantelte Stahldrähte zur Zugentlastung verwendet werden.

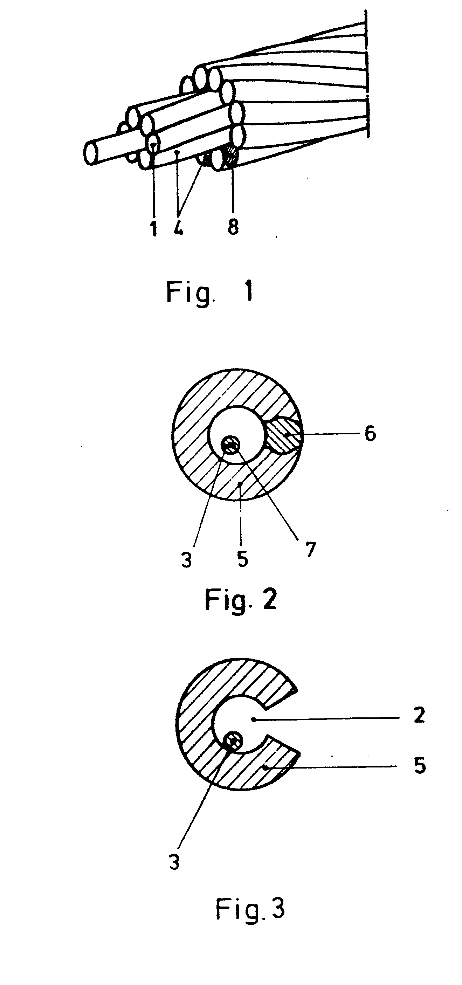

Figur 2 stellt den Querschnitt durch ein Lichtwellenleiterelement dar. Der Mantel 5 ist geschlitzt und durch einen Stopfen 6 verschlossen. Der Stopfen trägt an beiden Seiten eine Wulst, die mit entsprechenden Aussparungen in den Schlitz des Mantels zusammenpaßt und eine kraftschlüssige Verbindung mit dem Mantel eingeht. Durch diese Maßnahme wird erreicht, daß der Stopfen einrastet und festsitzt, auch ohne Anwendung eines Klebstoffes. Der Stopfen wird üblicherweise mit dem Grundkörper 5 verklebt, nachdem die Lichtwellenleiterader eingelegt ist. Wenn Grundkörper und Stopfen aus glasfaserverstärktem Kunststoff hergestellt sind, ist es ratsam, das Lichtwellenleiterelement in der inneren Lage anzuordnen.

Eine bevorzugte Ausführungsform ist in Figur 3 dargestellt. Der Mantel 5 besteht aus einer Aluminiumlegierung und wird in einer Strangpresse oder vergleichbaren Vorrichtung in der dargestellten Form hergestellt.

7

Das Profil zeichnet sich dadurch aus, daß es verschließbar ist, ohne daß ein Stopfen dazu benötigt wird. Nach dem Einlegen der Lichtwellenleiterader und Füllen mit einem Material zur Längswasserdichtigkeit läuft das Profil über paarige Walzen, die es zu einem kreisrunden Profil zusammendrücken. Der Spalt wird durch Verschweißen geschlossen. Dadurch ist gewährleistet, daß kein Wasser in den Hohlraum eindringen kann.

Selbstverständlich läßt sich auch das kunststoffoder glasfaserverstärkte Profil in dieser Form herstellen; nur ist darauf zu achten, daß das Umformen zum kreisrunden Profil erfolgt, bevor die Topfzeit abgelaufen ist. Innerhalb der Reaktionszeit des Harzes verschweißt das Profil lückenlos und ist damit dicht.

Bei Drähten mit größerem Durchmesser können auch mehrere Lichtwellenleiter, deren Durchmesser etwa 0,3 mm beträgt, in ein Lichtwellenleiterelement eingebracht werden.

14 Patentansprüche
 7 Seiten Beschreibung
 1 Zeichnung

Patentansprüche

1.  Lichtwellenleiter-Luftkabel, welches neben den der
    Zugfestigkeit und Energieübertragung dienenden ver-
    seilten Drähten mindestens ein Lichtwellenleiterele-
    ment mit einem Hohlkörper aufweist, in dem sich ein
    oder mehrere Lichtwellenleiter befinden, dadurch gekennzeichnet, daß das Lichtwellenleiterelement
    außerhalb der Seele angeordnet ist, daß es anstelle
    eines Drahtes vorgesehen ist und daß es die gleiche
    Schlaglänge wie die übrigen Drähte der Verseillage
    besitzt.

2.  Lichtwellenleiter-Luftkabel nach Anspruch 1, dadurch gekennzeichnet, daß der Durchmesser des Lichtwellenleiterelements höchstens gleich dem Durchmesser der Drähte ist.

3.  Lichtwellenleiter-Luftkabel nach Anspruch 1 oder 2, dadurch gekennzeichnet, daß der Hohlkörper des Lichtwellenleiterelements zug- und druckfest ausgebildet ist.

4.  Lichtwellenleiter-Luftkabel nach einem der Ansprüche 1 bis 3, dadurch gekennzeichnet, daß das Lichtwellenleiterelement in einer inneren Lage des Lichtwellenleiter-Luftkabels angeordnet ist.

5.  Lichtwellenleiter-Luftkabel nach einem der Ansprüche 1 bis 4, dadurch gekennzeichnet, daß der Hohlkörper (5) des Lichtwellenleiterelements zur Energieübertragung und/oder Zugentlastung vorgesehen ist.

6.  Lichtwellenleiter-Luftkabel nach einem der Ansprüche 1 bis 5, dadurch gekennzeichnet, daß der Grundkörper (5) aus faserverstärktem Kunststoff besteht.

7.  Lichtwellenleiter-Luftkabel nach einem der Ansprüche 1 bis 6, dadurch gekennzeichnet, daß der Hohlkörper (5) aus einem Profil mit Längsschlitz (2) besteht, auf dessen Grunde die Lichtwellenleiterader angeordnet ist.

8. Lichtwellenleiter-Luftkabel nach einem der Ansprüche 1 bis 7, dadurch gekennzeichnet, daß der Hohlkörper (5) durch einen zug- und druckfesten sowie wasserdichten Längsstopfen (6) verschlossen ist.

9. Lichtwellenleiter-Luftkabel nach einem der Ansprüche 1 bis 8, dadurch gekennzeichnet, daß der Stopfen (6) an seinen Flanken ein längslaufendes Profil ausweist, dessen Gegenstück sich auf dem Hohlkörper (5) befindet.

10. Lichtwellenleiter-Luftkabel nach einem der Ansprüche 1 bis 9, dadurch gekennzeichnet, daß die Lichtwellenleiterader (3) einen extrudierten Mantel (7) aufweist.

11. Lichtwellenleiter-Luftkabel nach einem der Ansprüche 1 bis 10, dadurch gekennzeichnet, daß im Hohlraum des Hohlkörpers (5) ein die Längswasserdichtigkeit bewirkendes gelartiges Material vorgesehen ist.

12. Verfahren zum Herstellen eines Lichtwellenleiter-Luftkabels nach einem der Ansprüche 1 bis 11, dadurch gekennzeichnet, daß ein drahtförmiger Hohlkörper (5) mit einer Längsnut (2) versehen ist, derart hergestellt wird, daß die Längsnut eine Lichtwellenleiterader (3) eingelegt wird, daß die Lichtwellenleiterader (3) in ein die Längsdichtigkeit bewirkendes Material eingebettet wird, und daß die Längsnut fugenlos verschlossen wird.

13. Verfahren nach Anspruch 12, dadurch gekennzeichnet, daß die Längsnut (2) durch Umformung des Hohlkörpers (5) und Verschweissen geschlossen wird.

14. Verfahren nach Anspruch 12, dadurch gekennzeichnet, daß die Längsnut (2) durch einen langgestreckten Stopfen (6) verschlossen wird.

Fig. 1

Fig. 2

Fig. 3

0221243